# EUROPEAN PATENT SPECIFICATION

(11) **EP 0 404 228 B1**
(45) Date of publication and mention of the grant of the patent: **17.11.1994**
(21) Application number: 90201531.2
(22) Date of filing: 13.06.1990
(51) Int. Cl.: C08G 67/02, B01J 31/16, B01J 31/24, B01J 31/04

(54) **Catalyst compositions for the preparation of polymers of carbon monoxide with olefinically unsaturated compounds**
Katalysatorzusammensetzungen für die Herstellung von Polymeren aus Kohlenmonoxid und olefinisch ungesättigten Verbindungen
Compositions de catalyseur pour la préparation de polymères de monoxyde de carbone et de composés oléfiniquement insaturés

(30) Priority: 14.06.1989 NL 8901508
(43) Date of publication of application: 27.12.1990
(73) Proprietor: SHELL INTERNATIONALE RESEARCH MAATSCHAPPIJ B.V., 2596 HR Den Haag (NL)
(72) Inventor: Wong, Pui Kwan, NL-2596 HR The Hague (NL)

(56) References cited:
- EP-A- 0 296 687
- EP-A- 0 300 583
- EP-A- 0 345 847

## Description

The invention relates to novel catalyst compositions which are suitable for use in the preparation of polymers of carbon monoxide with one or more olefinically unsaturated compounds.

The relevant polymers are linear polymers of carbon monoxide with one or more olefinically unsaturated hydrocarbons, in which polymers the units originating in carbon monoxide on the one hand, and the units originating in the applied olefinically unsaturated hydrocarbons on the other hand, occur in alternating order. They can be prepared by contacting the monomers in a reactor at elevated temperature and pressure with a catalyst solution in a diluent in which the polymers are insoluble or virtually insoluble, and which catalyst composition is based upon:
a) a palladium containing component,
b) an acid component,
c) a bidentate ligand component comprising two phosphorus, nitrogen or sulphur containing dentate groups via which the bidentate ligand is able to form a complex with the palladium containing component, and
d) optionally, a 1,4-quinone.

During the polymerization the polymers are obtained in the form of a suspension in the diluent. In the polymer preparation described hereinbefore, reactor fouling poses a problem. During polymerization, part of the polymers formed may be deposited on the reactor parts that are situated below the liquid level, such as reactor wall, baffle plates, stirrer shaft, stirrer blades, cooling and heating coils and plunger tubes. When the polymer suspension is withdrawn from the reactor, these deposited polymers remain in the reactor and they may not be removed by flushing the reactor with diluent. In some cases, the reactor fouling may assume exorbitant dimensions, in extreme cases, when the polymerization is conducted on a technical scale, of up to about 40%, which means that no more than about 60% of the prepared polymer will leave the reactor in the form of a suspension and about 40% will remain behind as a deposit on the reactor parts. The application of the polymerization on a technical scale may be severely hampered by this phenomenon.

In the past, the Applicant has carried out extensive research into this subject, which has shown, among other things, that reactor fouling can be reduced somewhat by polishing the areas onto which the polymer is generally deposited, or by lining these areas with certain materials, such as polypropylene, polytetrafluoroethene or polyamide. Although these measures do indeed lead to some reduction of reactor fouling, they are insufficient for the effective control of the fouling problem. It has further been shown that reactor fouling can be controlled more effectively by suspending a solid in the diluent before the monomers are contacted with the catalyst solution. According as the solid has a higher average particle size and a higher bulk density, a larger amount by weight thereof should be suspended per litre of diluent to achieve a given reduction in reactor fouling. Finally, it has been shown that very effective control of reactor fouling can be achieved by replacing component b) in the catalyst composition, by a polymer which comprises sulphonic acid groups and which is insoluble or virtually insoluble in the diluent. Examples of such polymers are perfluorinated polymeric sulphonic acid of the Nafion type and sulphonated styrene/divinylbenzene copolymers of the Amberlite and Dowex type (Amberlite and Dowex are trademarks).

However, it was established that the polymeric sulphonic acids used as component b) in the catalyst compositions have a severe drawback which makes this measure unsuitable for application on a technical scale. The polymeric sulphonic acid used as catalyst component was found to be incorporated entirely into the prepared polymer and cannot be easily removed therefrom. The presence of the acid in the polymer may have a very adverse effect on the processing properties of the polymers at high temperatures and may give rise to, for instance, discoloration and decomposition.

Continued research done by the Applicant into this subject has now shown that the above-mentioned drawbacks connected with the use of an acidic catalyst component b) which is insoluble in the diluent can be overcome by using as component c) a supported bidentate ligand which is insoluble or virtually insoluble in the diluent. These supported bidentate ligands can be obtained by coupling a solid support through reactive groups with a bidentate ligand which can form a complex with the palladium-containing component via two phosphorus, nitrogen or sulphur containing dentate groups that are present in the bidentate ligand. The use of these solid bidentate ligands as components c) results in a reduction of the reactor fouling to the same extent as was observed earlier with the application of the polymeric sulphonic acids. Unlike the latter acids, however, they have the great advantage that a minor quantity of the acid-free supported bidentate ligand which remains behind in the ready polymers has no adverse influence on the processing properties of the polymers at high temperatures. In order to achieve comparable reductions of reactor fouling, the quantity of solid that is introduced into the diluent according to the process of the invention may be considerably smaller than the quantity of any other solid that would be suspended therein according to processes found earlier for controlling reactor fouling.

Catalyst compositions on the basis of the afore-mentioned components a) and b), and a supported bidentate ligand as described hereinbefore as component c) are novel.

The present patent application therefore relates to novel catalyst compositions, characterized in that they are based upon
a) a palladium containing component,
b) an acid component,
c) a supported bidentate ligand which can be obtained from
   1) a solid support comprising reactive groups, and
   2) an unsupported bidentate ligand comprising two phosphorus, nitrogen or sulphur containing dentate groups via which the bidentate ligand is able to form a complex with the palladium containing component, and comprising, in addition to the dentate groups, a reactive group,
   by a coupling reaction involving the reactive groups of the solid support and the unsupported bidentate ligand, and
d) optionally, a 1,4-quinone.

The patent application further relates to the application of these catalyst compositions in the preparation of polymers of carbon monoxide with one or more olefinically unsaturated compounds. The patent application also relates to a process for the preparation of a supported bidentate ligand characterized by comprising reacting
1) a solid support comprising reactive groups, and
2) an unsupported bidentate ligand comprising two phosphorus, nitrogen or sulphur containing dentate groups via which the bidentate ligand is able to form a complex with a palladium containing component, and comprising, in addition to the dentate groups, a reactive group,
by a coupling reaction involving the reactive groups of the solid support and the unsupported bidentate ligand.

Moreover, some of the bidentate ligands which comprise a reactive group in addition to the two dentate groups and which may be considered for use in the preparation of supported bidentate ligands suitable as catalyst components c), are novel compounds. Finally, the present patent application relates to these novel compounds.

In the catalyst compositions of the invention, component a) is preferably a palladium salt of a carboxylic acid, and palladium acetate in particular.

Preferably, the component b) used is an organic acid with a pKa of less than 2. Halomonocarboxylic acids, such as trichloroacetic acid, difluoroacetic acid and trifluoroacetic acid are very suitable for the purpose. Trifluoroacetic acid is preferred as component b). In the catalyst compositions of the invention, component b) is preferably present in a quantity of 1-100 mol and in particular of 2-50 mol per mol of palladium. The acidic component b) may be incorporated in the catalyst composition not only as an individual component, but also combined with palladium, for instance by employing palladium trifluoroacetate as component a).

The supported bidentate ligand used in the catalyst compositions of the invention as component c) can be obtained from
1) a solid support comprising reactive groups, and
2) an unsupported bidentate ligand comprising two phosphorus, nitrogen or sulphur containing dentate groups via which the bidentate ligand is able to form a complex with the palladium containing component, and comprising, in addition to the dentate groups, a reactive group,
by a coupling reaction involving the reactive groups of the solid support and the unsupported bidentate ligand.

Examples of solid support materials containing reactive groups which can react with a reactive group present in a bidentate ligand including the following.
1) Support materials which contain carbonyl groups as reactive groups, such as a linear alternating carbon monoxide/ethene copolymer.
2) Support materials which contain hydroxyl groups as reactive groups, such as silica, alumina and hydrogenated linear alternating carbon monoxide/ethene copolymers in which at least part of the carbonyl groups have been converted into secondary alcohol groups.
3) Support materials which contain carboxylic acid groups as reactive groups, such as ethene/methacrylic acid copolymers.
4) Support materials which contain halogen-containing groups as reactive groups, such as chloromethyl-substituted polystyrenes and reaction products of silica with (2-chloroethyl)triethoxysilane.
5) Support materials which contain isocyanate groups as reactive groups, such as poly[methylene(polyphenylisocyanate)].

Examples of bidentate ligands which contain two dentate groups and a reactive group which can react with a reactive group present in the solid support material include the following.
A) Bidentate ligands which contain a hydroxyl group as reactive group, such as 2-hydroxy-1,3-bis[bis(2-methoxyphenyl)-phosphino]propane and 8-bis(2-methoxyphenyl)phosphino-7-[bis(2-methoxyphenyl)phosphino]methyloctan-1-ol.
B) Bidentate ligands which contain a trialkoxysilyl group as reactive group, such as 1-diphenylphosphino-2-diphenylphosphinomethyl-3-triethoxysilylpropane and the reaction products of 2-hydroxy-1,3-bis[bis(2-methoxyphenyl)phosphino]-propane and 8-bis(2-methoxyphenyl)phosphino-7-[bis(2-methoxyphenyl)phosphinomethyl]octan-1-ol with (3-isocyanatopropyl)triethoxysilane.
C) Bidentate ligands which contain an amino group as reactive group, such as 5-amino-1,10-phenanthroline.

Examples of suitable combinations of a support material and a bidentate ligand which can be used in the preparation of a supported bidentate ligand to be used as component c) in the catalyst compositions of the invention are, inter alia:
- a support material of class 1) and a bidentate ligand of class C) which may be used to obtain a supported bidentate ligand in which the bidentate ligand molecules are bound to the support through pyrrole rings,
- a support material of class 3) and a bidentate ligand of class C) which may be used to obtain a supported bidentate ligand in which the bidentate ligand molecules are bound to the support through amide groups,
- a support material of class 5) and a bidentate ligand of class A) which may be used to obtain a supported bidentate ligand in which the bidentate ligand molecules are bound to the support through carbamate groups, and
- a support material of class 4) and a bidentate ligand of class A) which may be used to obtain a supported bidentate ligand in which the bidentate ligand molecules are bound to the support through ether groups.

The preparation of the compounds which can be used as components c) in the catalyst compositions of the invention may be carried out by starting from an unsupported bidentate ligand which contains two nitrogen sulphur or phosphorus containing dentate groups that are present in the bidentate ligand. If a nitrogen bidentate ligand is used for this purpose, preference is given to a compound of the general formula 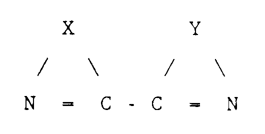
in which X and Y represent bridging groups with three or four atoms in the bridges at least two of which are carbon atoms, and in which either of these two bridging groups includes a reactive group which can react with a reactive group that is present in the solid support. An example of such a compound is 5-amino-1,10-phenanthroline. If for the preparation of catalyst composition c) a sulphur bidentate ligand is chosen, preference is given to a compound of the general formula R¹S-R-SR¹ in which R¹ is an optionally polarly substituted hydrocarbyl group and R is a bivalent organic bridging group containing at least two carbon atoms in the bridge which bridging group includes the reactive group which can react with a reactive group that is present in the solid support. An example of such a compound is 2-hydroxy-1,3-bis(phenylthio)propane.

It is preferred to select a phosphorus bidentate ligand for the preparation of catalyst component c). When such an unsupported bidentate ligand is used to prepare a catalyst component c), preference is further given to a compound of the general formula (R¹)₂P-R-P(R¹)₂, wherein R and R¹ have the meaning given hereinbefore. In this case, special preference is given to a compound in which R¹ represents an aryl group which contains optionally an alkoxy group as substituent in a position ortho to the phosphorus atom to which R¹ is attached and in which R has three atoms in the bridge of which the second atom carries a reactive group as substituent which can react with a reactive group that is present in the solid support.

In particular, the bridging group R is selected from bridging groups of the general formulae 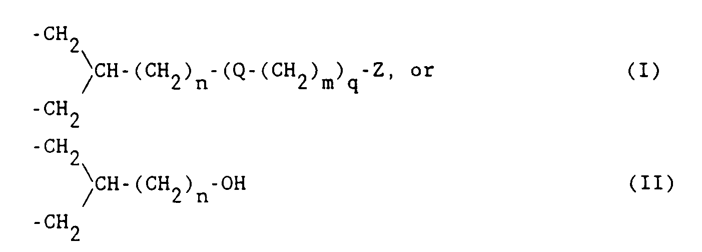
wherein n is an integer from 0 to 12 inclusive, Q is a carbamate bond of the formula -NH-CO-O- or -O-CO-NH-, m is an integer from 2 to 6 inclusive, q is 0 or 1 and Z is a trialkoxysilyl group having 1 - 6 carbon atoms in each of the alkoxy groups. Preferably, R¹ is an aryl group, in particular a phenyl group, which aryl or phenyl group contains an alkoxy group as substituent in a position ortho to the phosphorus atom to which R¹ is attached and in the general formula (I) q is 1, and, more preferably, in the general formulae (I) and (II) n is 0. Suitably, the alkoxy groups of R¹ contain up to 6 carbon atoms.

Some of these phosphorus bidentate ligands are novel compounds, viz., the bisphosphines of the general formula (R¹)₂P-R-P(R¹)₂, wherein R¹ represents a phenyl or a 2-alkoxyphenyl group and R is a bridging group selected from bridging groups of the general formula (I) as defined hereinbefore or of the formula 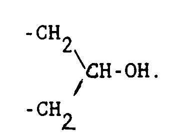
Examples of these novel compounds are 2-hydroxy-1,3-bis-[bis(2-alkoxyphenyl)phosphino]propanes, such as 2-hydroxy-1,3-bis-[bis(2-methoxyphenyl)phosphino]propane and compounds which may be obtained therefrom by their reaction with the relevant (ω-isocyanatoalkyl)trialkoxysilanes, such as compounds obtained by the reaction with (3-isocyanatopropyl)triethoxysilane.

Other examples of these novel compounds are 1,1-bis(diphenylphosphinomethyl)-ω-(trialkoxysilyl)-n-alkanes in which the n-alkanes have up to 13 carbon atoms, such as 1-diphenylphosphino-2-diphenylphosphinomethyl-3-triethoxysilylpropane. In addition, the reaction products of ω-hydroxy-1-bis(2-methoxyphenyl)phosphino-2-bis(2-methoxyphenyl)phosphinomethyl-n-alkanes in which the n-alkanes have up to 14 carbon atoms, such as 8-bis(2-methoxyphenyl)phosphino-7-[bis(2-methoxyphenyl)phosphinomethyl]octan-1-ol, with the (ω-isocyanatoalkyl)trialkoxysilanes mentioned hereinbefore, such as (3-isocyanatopropyl)triethoxysilane, are novel.

The relevant ω-hydroxy-bis(2-methoxyphenyl)phosphino-2-bis(2-methoxyphenyl)phosphinomethyl-n-alkanes can be prepared, for example, according to the methods which are the subject of the Applicant's GB-90.06576.4. These methods typically involve the reaction of an ether of the formula Cl-(CH₂)ₙ-O-Bu^{t} with diethyl malonate, followed by a reduction with lithium aluminium hydride in the presence of a tosylate to yield a compound of formula Bu^{t}-O-(CH₂)ₙ-CH(CH₂-O-Tos)₂, which is then reacted with NaP(2-methoxyphenyl)₂ thus replacing the tosylate groups by bis(2-methoxyphenyl)phosphino groups. The resulting ether is then hydrolysed with concentrated aqueous acid to yield the corresponding ω-alkanol.

The preparation of 2-hydroxy-1,3-bis[bis(2-alkoxyphenyl)phosphino]propanes may be carried out by the reaction in liquid ammonia of an alkali metal with a tris(2-alkoxyphenyl)phosphine, followed by the reaction of the alkali metal bis(2-alkoxyphenyl)phosphide thus obtained with an epihalohydrin. Thus can be prepared, for instance, 2-hydroxy-1,3-bis[bis(2-methoxyphenyl)phosphino]propane, by the reaction of sodium in liquid ammonia with tris(2-methoxyphenyl)phosphine, followed by the reaction of the sodium bis(2-methoxyphenyl)phosphide thus obtained with epichlorohydrin. Thus can be prepared phosphorus bidentate ligands which comprise a hydroxyl group as a reactive group, and which therefore belong to the class A mentioned hereinbefore.

When these novel phosphorus bidentate ligands which contain a hydroxyl group are contacted with an (ω-isocyanatoalkyl)trialkoxy silane, the hydroxyl group and the isocyanate group will react together to form a carbamate bond, while novel phosphorus bidentate ligands containing a trialkoxysilyl group as reactive group and thus belonging to the afore-mentioned class B are also formed.

Phosphorus bidentate ligands having a trialkoxysilyl group can also conveniently be prepared by reaction of a 1,1-bis(chloromethyl)-ω-trialkoxysilylalkane, for example 1,1-bis(chloromethyl)-2-triethoxysilylethane, with an alkali metal diphenylphosphide, suitably lithium diphenylphosphide, in an organic solvent at room temperature or in liquid ammonia. The 1,1-bis(chloromethyl)-ω-trialkoxysilylalkane starting material can be obtained by standard chemical reactions. For example, the trialkylsilyl group can be introduced by addition of trichlorosilane to the relevant 1,1-bis(chloromethyl)alkene, e.g. 1,1-bis(chloromethyl)ethene, using Speier's catalyst, i.e. platinum chloric acid in iso-propanol, which addition reaction is followed by conversion of the trichlorosilyl group into a trialkoxysilyl group by reacting the addition product with an alcohol, for example, ethanol.

A supported bidentate ligand which can be very suitably used as component c) in the catalyst compositions of the invention can be obtained by reacting a phosphorus bidentate ligand thus prepared which contains a trialkoxysilyl group as reactive group, with a silica support.

In the catalyst compositions of the invention, the quantity of the supported bidentate ligand used is preferably such that, per mol of palladium, the composition comprises 1-10 mol and in particular 2-5 mol of phosphorus, nitrogen or sulphur present in dentate groups.

In order to enhance the activities of the catalyst compositions of the invention, a 1,4-quinone may be incorporated as a component d). 1,4-benzoquinone and 1,4-naphthoquinone are very suitable for the purpose. Preferably, the amount of 1,4-quinone used is 5-5000 and in particular 10-1000 mol per mol of palladium.

The polymer preparation with the aid of the catalyst compositions of the invention is carried out by contacting the monomers at an elevated temperature and pressure with a suspension of the catalyst composition in a diluent in which the polymers are insoluble or virtually insoluble. Very suitable diluents are lower aliphatic alcohols, such as methanol.

Olefinically unsaturated compounds that can be polymerized with carbon monoxide by using the catalyst compositions according to the invention are preferably hydrocarbons. Examples of such hydrocarbons are ethene, propene, butene-1, hexene-1, octene-1, cyclopentene and styrene. The catalyst compositions are in particular very suitable for application in the preparation of copolymers of carbon monoxide with ethene and in the preparation of terpolymers of carbon monoxide with ethene and propene.

The quantity of catalyst composition employed in the preparation of the polymers may vary within wide limits. The quantity of catalyst composition used per mol of olefinically unsaturated compound to be polymerized preferably contains 10⁻⁷-10⁻³ and in particular 10⁻⁶-10⁻⁴ gram atom of palladium.

The preparation of the polymers is preferably carried out at a temperature of 40-120 °C and a pressure of 20-150 bar and in particular at a temperature of 50-100 °C and a pressure of 30-100 bar. The molar ratio of the olefinically unsaturated compounds relative to carbon monoxide in the mixture to be polymerized preferably is in the range of from 10:1 to 1:5 and in particular of from 5:1 to 1:2.

The invention will now be illustrated by the following examples.

### EXAMPLE 1

2-hydroxy-1,3-bis[bis(2-methoxyphenyl)phosphino]propane was prepared as follows. Into a stirred reactor which was kept at -45 °C by cooling and in which there was a mixture of 101.2 g tri(2-methoxylphenyl)phosphine and 1100 ml of ammonia, 13.1 g of sodium was introduced. After 4 hours, 15.3 g of ammonium chloride, 50 ml of tetrahydrofuran and a solution of 13.2 g of epichlorohydrin in 200 ml of tetrahydrofuran were successively added. After evaporation of ammonia and heating of the mixture at 45 °C during 0.75 hour, the mixture was cooled to 20 °C and 105 ml of water was added. The reaction mixture separated into a layer of water and a layer of tetrahydrofuran. Methoxybenzene and tetrahydrofuran were evaporated from the tetrahydrofuran layer. The residue was extracted with 500 ml of dichloromethane and from the solution thus obtained, dichloromethane was removed by evaporation. The remaining white solid material was washed with methanol and dried. The 2-hydroxy-1,3-bis[bis(2-methoxyphenyl)phosphino]propane thus prepared was obtained in a yield of 71% calculated on the phosphine used as starting material.

### EXAMPLE 2

A supported phosphorus bidentate ligand was prepared as follows. A mixture of 5.49 g of 2-hydroxy-1,3-bis[bis(2-methoxyphenyl)phosphino]propane, 2.47 g of (3-isocyanatopropyl)triethoxysilane and 100 ml of para-xylene was refluxed for 12 hours. After addition of 38.56 g of silica, the mixture was refluxed for another 12 hours. The supported phosphorus bidentate ligand was filtered off, washed with para-xylene and dried.

### EXAMPLE 3

A palladium/phosphorus bidentate ligand composition was prepared as follows. A mixture of 5.15 g of the supported phosphorus bidentate ligand prepared according to Example 2, 37 mg of palladium acetate and 50 ml of methanol was stirred for 16 hours at room temperature. The palladium/phosphorus bidentate ligand composition obtained was filtered off and dried. The composition comprised 4.33 mg palladium/g.

### EXAMPLE 4

A carbon monoxide/ethene copolymer was prepared as follows. A mechanically stirred autoclave with a capacity of 300 ml was charged with 180 ml of methanol. After the contents of the autoclave were brought to 90 °C, a 1:1 carbon monoxide/ethene mixture was blown in until a pressure of 55 bar was reached. Subsequently, a catalyst solution was introduced into the autoclave which comprised
24.5 ml methanol,
1.5 ml toluene,
0.01 mmol palladium acetate,
0.011 mmol 2-hydroxy-1,3-bis[bis(2-methoxyphenyl)phosphino]propane,
0.20 mmol trifluoroacetic acid, and
2.0 mmol 1,4-naphthoquinone.

The pressure inside the autoclave was maintained by the introduction of a 1:1 carbon monoxide/ethene mixture. Polymerization was terminated after 4.98 hours by cooling the reaction mixture to room temperature and releasing the pressure.

A polymer suspension was obtained which comprised 4.98 g of copolymer. 19.90 g of copolymer had remained behind in the autoclave. Therefore, in this experiment reactor fouling amounted to 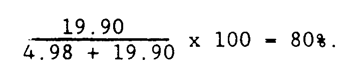
The polymerization rate was 4.7 kg copolymer/g palladium.hour.

### EXAMPLE 5

A carbon monoxide/ethene copolymer was prepared as follows. A mechanically stirred autoclave with a capacity of 300 ml was charged with 220 ml of methanol, 439 mg of the palladium/phosphorus bidentate ligand composition prepared according to Example 3 and 0.039 mmol of trifluoroacetic acid. After the contents of the autoclave were brought to 90 °C, a 1:1 carbon monoxide/ethene mixture was blown in until a pressure of 55 bar was reached. The pressure inside the autoclave was maintained by the introduction of a 1:1 carbon monoxide/ethene mixture. Polymerization was terminated after 5.52 hours by cooling the reaction mixture to room temperature and releasing the pressure. A polar suspension was obtained which comprised 10.44 g of copolymer. 0.10 g of copolymer had remained behind in the autoclave, so that in this case, reactor fouling amounted to 0.9%. The polymerization rate was 1.0 kg copolymer/g palladium.hour.

### EXAMPLE 6

A catalyst composition was prepared as follows. A mixture of 2 g of the supported phosphorus bidentate ligand prepared according to Example 2, 166 mg of palladium trifluoroacetate and 25 ml of tetrahydrofuran was stirred for 16 hours at room temperature. The catalyst composition obtained was filtered off, washed with tetrahydrofuran and dried. The catalyst composition comprised 12.5 mg palladium/g.

### EXAMPLE 7

A catalyst composition was prepared substantially in the same way as in Example 6, except that now the starting mixture comprised 112 mg of palladium acetate and 170 mg of trifluoroacetic acid instead of palladium trifluoroacetate. The catalyst composition comprised 13.5 mg palladium/g.

### EXAMPLE 8

A carbon monoxide/ethene copolymer was prepared substantially in the same way as in Example 5, except for the following differences
a) 154 mg of the catalyst composition prepared according to Example 6 was introduced into the autoclave instead of the palladium/phosphorus bidentate ligand composition, prepared according to Example 3, and trifluoroacetic acid, and
b) the reaction time was 18.8 hours instead of 5.52 hours.

A polymer suspension was obtained which comprised 21.2 g of copolymer. 0.65 g of copolymer had remained behind in the autoclave, so that in this case, reactor fouling amounted to 3%. The polymerization rate was 0.61 kg copolymer/g palladium.hour.

### EXAMPLE 9

A carbon monoxide/ethene copolymer was prepared substantially in the same way as in Example 5, except for the following differences
a) 64.6 mg of the catalyst composition prepared according to Example 7 was introduced into the autoclave instead of the palladium/phosphorus bidentate ligand composition and trifluoroacetic acid, and
b) the reaction time was 24.2 hours instead of 5.52 hours.

A polymer suspension was obtained which comprised 9.3 g of copolymer. 0.2 g of copolymer had remained behind in the autoclave, so that in this case, reactor fouling amounted to 2%. The polymerization rate was 0.39 kg copolymer/g palladium.hour.

### EXAMPLE 10

A carbon monoxide/ethene copolymer was prepared substantially in the same way as in Example 4, except for the following differences
a) in addition to 180 ml of methanol, the autoclave contained 155 mg of the silica used as starting material in Example 2,
b) the catalyst solution contained no 1,4-naphthoquinone, and
c) the reaction time was 3.2 hours instead of 4.98 hours.

A polymer suspension was obtained which comprised 5.74 g of copolymer. 4.16 g of copolymer had remained behind in the autoclave, so that in this case, reactor fouling amounted to 42%. The polymerization rate was 2.91 kg copolymer/g palladium.hour.

### EXAMPLE 11

A supported phosphorus bidentate ligand was prepared as follows. A mixture of 1.87 g of 8-bis(2-methoxyphenyl)phosphino--7-[bis(2-methoxyphenyl)phosphinomethyl]octan-1-ol, 0.8 g (3-isocyanatopropyl)triethoxysilane and 30 ml of para-xylene was refluxed for 12 hours. After the addition of 4 g of silica, the mixture was refluxed for another 12 hours. The supported phosphorus bidentate ligand was filtered off, washed with para-xylene and dried.

### EXAMPLE 12

A palladium/phosphorus bidentate ligand composition was prepared as follows. A mixture 551 mg of the supported phosphorus bidentate ligand prepared according to Example 11, 34.3 mg of palladium acetate, 170 mg of trifluoroacetic acid and 30 ml of acetone was stirred for 3 hours at room temperature under a nitrogen blanket. After the addition of 51 mg of trifluoroacetic acid and 25 ml of acetone stirring was continued for another 2 hours. The palladium/phosphorus bidentate ligand composition was filtered off, washed with acetone and dried. The composition comprised 15.3 mg palladium/g.

### EXAMPLE 13

A carbon monoxide/ethene copolymer was prepared substantially in the same way as in Example 5, except for the following differences
a) 111 mg of the palladium/phosphorus bidentate ligand composition prepared according to Example 12 was introduced into the autoclave in stead of trifluoroacetic acid and the palladium/phosphorus bidentate ligand composition prepared according to Example 3,
b) 130 ml of methanol was used in stead of 220 ml, and
c) the reaction time was 5 hours, in stead of 5.52 hours.

A polymer suspension was obtained which comprised 3.1 g of copolymer. 0.06 g of copolymer had remained behind in the autoclave, so that in this case, reactor fouling amounted to 2%. The polymerization rate was 0.4 kg copolymer/g palladium.hour.

### EXAMPLE 14

A supported phosphorus bidentate ligand was prepared substantially in the same way as in Example 2, except that 8-bis(2-methoxyphenyl)phosphino-7-[bis(2-methoxyphenyl)phosphinomethyl]octan-1-ol was used instead of 2-hydroxy-1,3-bis[bis(2-methoxyphenyl)phosphino]propane.

### EXAMPLE 15

A palladium/phosphorus bidentate ligand composition was prepared substantially in the same way as in Example 3, except that the supported phosphorus bidentate ligand prepared according to Example 14 was used in stead of the supported phosphorus bidentate ligand prepared according to Example 2. The composition comprised 7.4 mg palladium/g.

### EXAMPLE 16

A carbon monoxide/ethene copolymer was prepared substantially in the same way as in Example 5, except for the following differences
a) 120 mg of the palladium/phosphorus bidentate ligand composition prepared according to Example 15 was introduced into the autoclave in stead of the palladium/phosphorus bidentate ligand composition prepared according to Example 3,
b) 0.017 mmol of trifluoroacetic acid was introduced in stead of 0.039 mmol,
c) 130 ml methanol was used in stead of 220 ml, and
d) the reaction time was 65 hours, in stead of 5.52 hours.

A polymer suspension was obtained which comprised 26.7 g of copolymer. 2.3 g of copolymer had remained behind in the autoclave, so that in this case, reactor fouling amounted to 8%. The polymerization rate was 0.5 kg copolymer/g palladium.hour.

### EXAMPLE 17

A supported phosphorus bidentate ligand was prepared substantially in the same way as in Example 2, except for the following differences
a) 1-diphenylphosphino-2-diphenylphosphinomethyl-3-triethoxysilylpropane was used in stead of 2-hydroxy-1,3-bis[bis-(2-methoxyphenyl)phosphino]propane and (3-isocyanatopropyl)-triethoxysilane, and
b) toluene was used in stead of para-xylene.
The supported phosphorus bidentate ligand comprised 0.02 g of phosphorus/g.

Of Examples 1-17, Examples 1-3, 5-9 and 11-17 are examples in accordance with the invention. Example 1 is concerned with the preparation of a novel bisphosphine which includes a hydroxyl group as reactive group. Examples 2, 11 and 14 are concerned with the preparation of novel bisphosphines which include a triethoxysilyl group as reactive group and, as well as Example 17, with the preparation of supported bidentate ligands by the reaction of these novel bisphosphines with a silica support. In Examples 3, 12 and 15, supported bidentate ligands are combined with palladium to form catalyst components. In Examples 5 and 16, these catalyst components form part of the catalyst compositions employed in the polymerization of carbon monoxide with ethene. Examples 6-9, 12, 13, 15 and 16 are concerned with the preparation of catalyst compositions of the invention as well as with their application in the preparation of copolymers of carbon monoxide with ethene. Examples 4 and 10 fall outside the scope of the invention and have been included herein for comparison. Examples 4 and 10 relate to the conventional preparation of carbon monoxide/ethene copolymers by contacting the monomers with a solution of a catalyst composition.

With the aid of ¹³C-NMR analysis it was established that the carbon monoxide/ethene copolymers prepared by Examples 4, 5, 8-10, 13 and 15 were made up of linear chains in which units originating in carbon monoxide on the one hand, and units originating in ethene on the other hand, occurred in alternating order.

That reactor fouling is effectively controlled by employing a catalyst composition according to the invention becomes clear upon comparison of the results of Example 4 (80% reactor fouling) and Examples 5, 8, 9, 13 and 16 (0.9, 3, 2, 2 and 8% reactor fouling, respectively). That this drastic reduction in reactor fouling is not caused by the presence of any solid matter inside the reactor becomes evident upon comparison of the results of Examples 8 and 10. Although in Example 10 the reactor contained a similar quantity of solid matter as led to a reactor fouling of only 3% when used as solid catalyst composition in Example 8, the degree of reactor fouling in Example 10 was 42%.

## Claims

1. Catalyst compositions, characterized in that they are based upon
a) a palladium containing component,
b) an acid component,
c) a supported bidentate ligand which can be obtained from
1) a solid support comprising reactive groups, and
2) an unsupported bidentate ligand comprising two phosphorus, nitrogen or sulphur containing dentate groups via which the bidentate ligand is able to form a complex with the palladium containing component, and comprising, in addition to the dentate groups, a reactive group,
by a coupling reaction involving the reactive groups of the solid support and the unsupported bidentate ligand, and
d) optionally, a 1,4-quinone.

2. Catalyst compositions as claimed in claim 1, characterized in that they are based upon a palladium salt of a carboxylic acid, such as palladium acetate, as component a).

3. Catalyst compositions as claimed in claim 1 or 2, characterized in that they are based upon an organic acid with a pKa of less than 2, as component b).

4. Catalyst compositions as claimed in any of claims 1-3, characterized in that the unsupported bidentate ligand is a phosphorus bidentate ligand of the general formula (R¹)₂P-R-P(R¹)₂, in which R¹ is an optionally polarly substituted hydrocarbyl group and R is a bivalent organic bridging group containing at least two carbon atoms in the bridge, which bridging group includes the reactive group.

5. Catalyst compositions as claimed in claim 4, characterized in that R¹ is an aryl group which contains optionally an alkoxy group as substituent in a position ortho to the phosphorus atom to which R¹ is attached and the bridging group R is selected from bridging groups of the general formulae 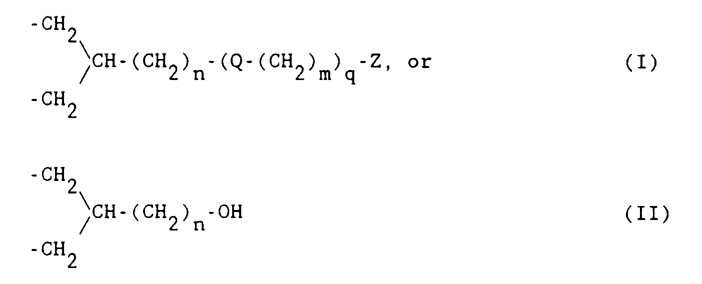 wherein n is an integer from 0 to 12 inclusive, Q is a carbamate bond, m is an integer from 2 to 6 inclusive, q is 0 or 1 and Z is a trialkoxysilyl group having 1 - 6 carbon atoms in each of the alkoxy groups.

6. Catalyst compositions as claimed in claim 5, characterized in that R¹ is an aryl group which contains an alkoxy group as substituent in a position ortho to the phosphorus atom to which R¹ is attached and in the general formula (I) q is 1.

7. Catalyst compositions as claimed in claim 6, characterized in that in the general formulae (I) and (II) n is 0.

8. Catalyst compositions as claimed in any of claims 5-7, characterized in that as component c) they include a reaction product of a silica support with an unsupported bidentate ligand as claimed in any of claims 5-7.

9. Catalyst compositions as claimed in any of claims 1-8, characterized in that they comprise 1-100 mol of component b) per mol of palladium, they include such a quantity of component c) as to comprise 1-10 mol of phosphorus nitrogen or sulphur present in dentate groups per mol of palladium, and, optionally they comprise 5-5000 mol of component d) per mol of palladium.

10. Catalyst compositions as claimed in any of claims 1-9, characterized in that they include 1,4-benzoquinone or 1,4-naphthoquinone, as component d).

11. Process for the preparation of polymers, characterized in that a mixture of carbon monoxide with one or more olefinically unsaturated compounds is contacted at an elevated temperature and pressure with a suspension of a catalyst composition as claimed in any of claims 1-10 in a diluent in which the polymers are insoluble or virtually insoluble.

12. Bisphosphines of the general formula (R¹)₂P-R-P(R¹)₂, wherein R¹ represents a phenyl or a 2-alkoxyphenyl group and R is a bridging group selected from bridging groups of the general formula (I) as defined in claim 5 or of the formula

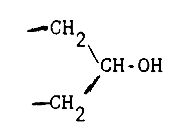

13. Bisphosphines as claimed in claim 12, characterized in that R¹ is a 2-alkoxyphenyl group and in the general formula (I) q is 1.

14. Bisphosphines as claimed in claim 13, characterized in that in the general formula (I) n is 0.

15. Process for the preparation of a supported bidentate ligand characterized by comprising reacting
1) a solid support comprising reactive groups, and
2) an unsupported bidentate ligand comprising two phosphorus, nitrogen or sulphur containing dentate groups via which the bidentate ligand is able to form a complex with a palladium containing component, and comprising, in addition to the dentate groups, a reactive group,
by a coupling reaction involving the reactive groups of the solid support and the unsupported bidentate ligand.

## Patentansprüche

1. Katalysatorzusammensetzungen, dadurch gekennzeichnet, daß sie auf
a) einer Palladium enthaltenden Komponente,
b) einer sauren Komponente,
c) einem zweizähnigen Liganden auf einem Träger, der aus
1) einem festen, reaktive Gruppen enthaltenden Träger, und
2) einem zweizähnigen Liganden ohne Träger, der 2 Phosphor, Stickstoff oder Schwefel enthaltende Dentatgruppen, über welche der zweizähnige Ligand einen Komplex mit der Palladium enthaltenden Komponente bilden kann, und zusätzlich zu den Dentatgruppen eine reaktive Gruppe umfaßt,
durch eine Kupplungsreaktion, an welcher die reaktiven Gruppen des festen Trägers und des zweizähnigen Liganden ohne Träger beteiligt sind, erhalten werden kann, und
d) gegebenenfalls ,einem 1,4-Chinon
basiert.

2. Katalysatorzusammensetzungen, wie in Anspruch 1 beansprucht, dadurch gekennzeichnet, daß sie auf einem Palladiumsalz einer Carbonsäure, wie Palladiumacetat, als Komponente a) basieren.

3. Katalysatorzusammensetzungen, wie in Anspruch 1 oder 2 beansprucht, dadurch gekennzeichnet, daß sie auf einer organischen Säure mit einem pKa-Wert von weniger als 2 als Komponente b) basieren.

4. Katalysatorzusammensetzungen, wie in einem der Ansprüche 1 bis 3 beansprucht, dadurch gekennzeichnet, daß der zweizähnige Ligand ohne Träger ein Phosphorligand der allgemeinen Formel (R¹)₂P-R-P(R¹)₂ ist, in welcher R¹ eine gegebenenfalls polar substituierte Kohlenwasserstoffgruppe und R eine zweiwertige organische Brückengruppe mit mindestens 2 Kohlenstoffatomen in der Brücke ist, welche Brückengruppe die reaktive Gruppe umfaßt.

5. Katalysatorzusammensetzungen, wie in Anspruch 4 beansprucht, dadurch gekennzeichnet, daß R¹ eine Arylgruppe ist, die gegebenenfalls eine Alkoxygruppe als Substituenten in einer ortho-Position zum Phosphoratom, an welches R¹ gebunden ist, enthält, und die Brückengruppe R ausgewählt ist aus den Brückengruppen der allgemeinen Formeln 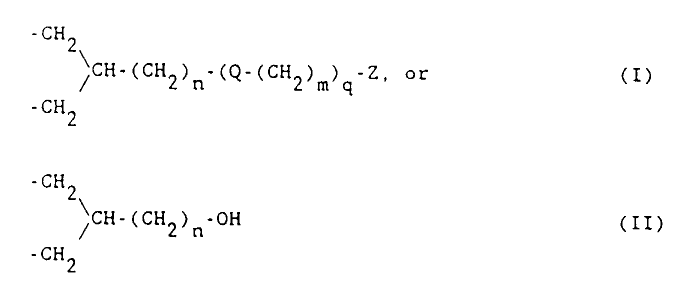 in welchen n eine ganze Zahl von 0 bis 12 einschließlich ist, Q eine Carbamatbindung darstellt, m eine ganze Zahl von 2 bis 6 einschließlich ist, q den Wert 0 oder 1 hat und Z eine Trialkoxysilylgruppe mit 1 bis 6 Kohlenstoffatomen in jeder der Alkoxygruppen ist.

6. Katalysatorzusammensetzungen, wie in Anspruch 5 beansprucht, dadurch gekennzeichnet, daß R¹ eine Arylgruppe ist, welche eine Alkoxygruppe als Substituent in einer ortho-Position zum Phosphoratom, an welches R¹ gebunden ist, enthält und in der allgemeinen Formel (I) q den Wert 1 hat.

7. Katalysatorzusammensetzungen, wie in Anspruch 6 beansprucht, dadurch gekennzeichnet, daß in den allgemeinen Formeln (I) und (II) n den Wert 0 hat.

8. Katalysatorzusammensetzungen, wie in einem der Ansprüche 5 bis 7 beansprucht, dadurch gekennzeichnet, daß sie als Komponente c) ein Reaktionsprodukt eines Siliciumdioxidträgers mit einem zweizähnigen Ligand ohne Träger umfassen, wie in einem der Ansprüche 5 bis 7 beansprucht.

9. Katalysatorzusammensetzungen, wie in einem der Ansprüche 1 bis 8 beansprucht, dadurch gekennzeichnet, daß sie 1 bis 100 Mol der Komponente b) je Mol Palladium umfassen, daß sie eine Menge der Komponente c) derart enthalten , daß sie 1 bis 10 Mol Phosphor, Stickstoff oder Schwefel in Dentatgruppen je Mol Palladium umfassen, und, daß sie gegebenenfalls 5 bis 5000 Mol der Komponente d) je Mol Palladium umfassen.

10. Katalysatorzusammensetzungen, wie in einem der Ansprüche 1 bis 9 beansprucht, dadurch gekennzeichnet ,daß sie 1,4-Benzochinon oder 1,4-Naphthochinon als Komponente d) enthalten.

11. Verfahren zur Herstellung von Polymeren, dadurch gekennzeichnet, daß eine Mischung von Kohlenmonoxid mit einer oder mehreren olefinisch ungesättigten Verbindung(en) bei erhöhter Temperatur und erhöhtem Druck mit einer Suspension einer Katalysatorzusammensetzung, wie in einem der Ansprüche 1 bis 10 beansprucht, in einem Verdünnungsmittel, in welchem die Polymere unlöslich oder praktisch unlöslich sind, kontaktiert wird.

12. Bisphosphine der allgemeinen Formel (R¹)₂P-R-P(R¹)₂, in welcher R¹ eine Phenyl- oder eine 2-Alkoxyphenylgruppe ist und R eine Brückengruppe, ausgewählt aus den Brückengruppen der allgemeinen Formel (I), wie in Anspruch 5 definiert, oder der Formel 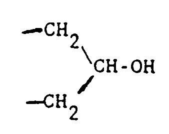 darstellt.

13. Bisphosphine, wie in Anspruch 12 beansprucht, dadurch gekennzeichnet, daß R¹ eine 2-Alkoxyphenylgruppe ist und daß in der allgemeinen Formel (I) q den Wert 1 hat.

14. Bisphosphine, wie in Anspruch 13 beansprucht, dadurch gekennzeichnet ,daß in der allgemeinen Formel (I) n den Wert 0 hat.

15. Verfahren zur Herstellung eines zweizähnigen Liganden auf einem Träger, dadurch gekennzeichnet, daß es die Umsetzung
1) eines reaktive Gruppen umfassenden festen Trägers, und
2) eines 2 Phosphor, Stickstoff oder Schwefel enthaltende Dentatgruppen, über welche der zweizähnige Ligand einen Komplex mit einer Palladium enthaltenden Komponente bilden kann, und außer den Dentatgruppen eine reaktive Gruppen enthaltenden zweizähnigen Liganden ohne Träger
durch eine Kupplungsreaktion, an welcher die reaktiven Gruppen des festen Trägers und des zweizähnigen Liganden ohne Träger beteiligt sind, umfaßt.

## Revendications

1. Compositions catalytiques, caractérisées en ce qu'elles ont pour base:
a) un composant contenant du palladium,
b) un composant acide,
c) un composant ligand bidenté comprenant deux groupes dentés contenant du phosphore, de l'azote ou du soufre, par l'intermédiaire desquels le ligand bidenté est apte à former un complexe avec le composant contenant du palladium, et
d) en option, une 1,4-quinone.

2. Compositions catalytiques selon la revendication 1, caractérisées en ce qu'elles ont pour base un sel de palladium d'un acide carboxylique, tel cue l'acétate de palladium, en tant cue composant a).

3. Compositions catalytiques selon l'une des revendications 1 ou 2, caractérisées en ce qu'elles ont pour base un acide organique ayant un pKa inférieur à 2, en tant que composant b).

4. Compositions catalytiques selon l'une quelconque des revendications 1-3, caractérisées en ce que le ligand bidenté sans support est un ligand bidenté phosphoré de formule générale (R¹)₂P-R-P(R¹)₂, où R¹ est un groupe hydrocarbyle éventuellement substitué de manière polaire et R est un groupe de pontage organique bivalent contenant au moins deux atomes de carbone dans le pont, le groupe de pontage comprenant le groupe réactif.

5. Compositions catalytiques selon la revendication 4, caractérisées en ce que R¹ est un groupe aryle contenant en option un groupe alcoxy en tant que substituant en position ortho par rapport à l'atome de phosphore auquel R¹ est fixé et le groupe de pontage R étant choisi parmi les groupes de pontage de formule générale 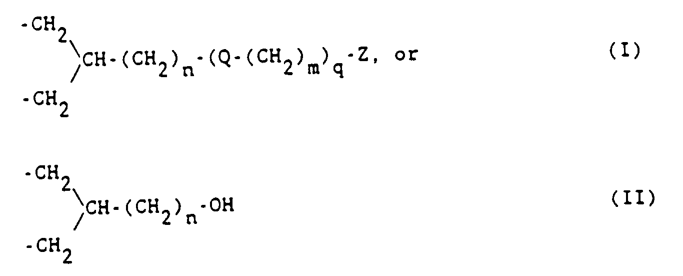 où n est un entier de 0 à 12 inclusivement, Q est une liaison carbamate, m et étant un entier de 2 à 6 inclusivement, q est 0 ou 1 et Z est un groupe trialcoxysilyle ayant 1-6 atomes de carbone dans chacun des groupes alcoxy.

6. Compositions catalytiques selon la revendication 5, caractérisées en ce que R¹ est un groupe aryle contenant un groupe alcoxy en tant que substituant en position ortho par rapport à l'atome de phosphore auquel R¹ est fixé et dans la formule générale (I) q est 1.

7. Compositions catalytiques selon la revendication 6, caractérisées en ce que dans les formules générales (I) et (II) n est 0.

8. Compositions catalytiques selon l'une quelconque des revendications 5-7, caractérisées en ce qu'elles comportent en tant que composant c) un produit de réaction d'un support de silice avec un ligand bidenté sans support selon l'une quelconque des revendications 5-7.

9. Compositions catalytiques selon l'une quelconque des revendications 1-8, caractérisées en ce qu'elles comportent 1-100 mol de composant b) par mol de palladium, elles comprennent une quantité de composant c) telle qu'elles comprennent 1-10 mol de phosphore, d'azote ou de soufre présent dans les groupes dentés par mol de palladium, et elles comprennent en option 5-5000 mol de composant d) par mol de palladium.

10. Compositions catalytiques selon l'une quelconque des revendications 1-9, caractérisées en ce qu'elles comprennent de la 1,4-benzoquinone ou de la 1,4-naphtoquinone, en tant que composant d).

11. Procédé pour la préparation de polymères, caractérisé en ce qu'un mélange de monoxyde de carbone avec un ou plusieurs composés à insaturations oléfiniques est mis en contact à température élevée et sous pression avec une suspension d'une composition catalytique selon l'une quelconque des revendications 1-10 dans un diluant dans lequel les polymères sont insolubles ou pratiquement insolubles.

12. Bisphosphines de formule générale (R¹)₂P-R-P(R¹)₂, où R¹ représente un groupe phényle ou 2-alcoxyphényle et R est un groupe frontal de pontage choisi parmi les groupes de pontage de formule générale (I) selon la revendication 5 ou de formule

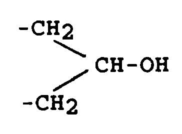

13. Bisphosphines selon la revendication 12, caractérisées en ce que R¹ est un groupe 2-alcoxyphényle et dans la formule générale (I) q est 1.

14. Bisphosphines selon la revendication 13, caractérisées en ce que dans la formule générale (I) n est 0.

15. Procédé pour la préparation d'un ligand bidenté sur support, caractérisé en ce qu'il comprend la réaction de
1) un support solide comprenant des groupes réactifs, et
2) un ligand bidenté sans support comprenant deux groupes dentés contenant du phosphore, de l'azote ou du soufre par l'intermédiaire desquels le ligand bidenté est apte à former un complexe avec un composant contenant du palladium, et comprenant en plus des groupes dentés un groupe réactif,
par une réaction de couplage impliquant les groupes réactifs du support solide et le ligand bidenté sans support.
